# DEMANDE DE BREVET EUROPEEN

(11) **EP 2 159 130 A1**
(43) Date de publication de la demande: **03.03.2010**
(21) Numéro de dépôt: 09011187.3
(22) Date de dépôt: 28.08.2009
(51) Int. Cl.: B62B 3/18, A45C 5/14, B65D 21/02

(54) **Jeu de bacs amovibles pour caddie à corbeille**

(30) Priorité: 29.08.2008 FR 0804768
(71) Demandeur: Kulczynski, Bertrand, 01340 Attignat (FR)
(72) Inventeur: Kulczynski, Bertrand, 01340 Attignat (FR)

(57) **Abrégé**

Jeu de bacs (21, 22, 23) amovibles pour un chariot d'achat à corbeille (1), ledit chariot (1) comportant une corbeille (2) destinée à contenir les marchandises, ladite corbeille (2) étant supportée par un socle (3) muni de roulettes (4), ledit chariot (1) comportant une poignée de manoeuvre (5), lesdits bacs (21, 22, 23) amovibles étant empilables et/ou emboîtables, ledit jeu de bacs comprenant des bacs (21, 22, 23) ayant chacun une structure rigide comportant une paroi latérale plane avec un moyen de fixation (24) permettant de suspendre le bac (21, 22, 23) par sa tranche à l'une des parois (6, 7, 8) de la corbeille (2).

Selon l'invention, ledit jeu de bacs (21, 22, 23) amovibles comprend un bac frontal (21) et deux bacs latéraux (22, 23), au moins deux bacs étant différents entre eux, et étant destinés à être adaptés sur le pourtour extérieur de la corbeille (2) du chariot d'achat à corbeille (1).

## Description

### Domaine de l'invention

La présente invention est relative à des bacs ou conteneurs amovibles pour un chariot d'achat à corbeille, avec ou sans siège pour enfant, destiné à être utilisé par des clients en libre service, dans des supermarchés, des magasins de bricolage, de jardinage ou de décoration, etc.

### Etat de la technique

Un chariot d'achat à corbeille (appelé plus couramment un « caddie ») est généralement composé d'une corbeille destinée à contenir les marchandises, supportée par un socle équipé d'au moins quatre roulettes, et munie d'une poignée de manoeuvre. Certains chariots comprennent, de plus, un siège pour le transport de l'enfant. De tels chariots sont décrits dans la norme européenne EN 1929-1. La forme de la corbeille est souvent celle d'un tronc de prisme. Les chariots sont remplis en magasin selon la manière propre à chaque utilisateur, ensuite ils sont complètement déchargés en arrivant à la caisse. Cette opération de déchargement en caisse est souvent laborieuse, surtout lorsque les produits ont été rangés par ordre décroissante de leur poids, du bas vers le haut, et que les personnes souhaitent les remettre à la caisse dans un même ordre, voire en les ordonnant par catégories, en vue de leur chargement ultérieur dans des sacs ou cabas.

Une solution à ce problème a été décrit dans les documents BE 1 006 703, DE 10 2004 005 600, DE 297 07 079 U, DE 298 11 973 U, ou GB 2 116 490, où l'on utilise des paniers empilables que l'on pose au fond de la corbeille du chariot. Ce type de paniers occupent tout le volume de la corbeille et ne permettent pas de disposer d'autres objets, tels les objets lourds au fond de la corbeille.

Une autre solution à été décrite dans le document US 4,560,096 où les paniers sont souples, ils sont munis de poignées souples à crochet ou de poignées rigides permettant leur suspension sur chacun des rebords latéraux de la corbeille du chariot. Dans une variante, un tel panier peut être accroché à l'avant et à l'extérieur de la corbeille du chariot. Ces paniers souples s'adaptent mieux aux différentes dimensions latérales des corbeilles de chariot, mais présentent l'inconvénient d'être limités au volume interne de la corbeille. Par ailleurs, lorsqu'il est placé à l'avant de la corbeille, un tel panier peut provoquer un basculement du chariot en l'absence de contre-poids à l'arrière, raison pour laquelle il est plutôt utilisé en cette position pour charger des marchandises après leur paiement en caisse.

Le document EP 1 792 548 décrit également un panier souple dont la poignée peut être accrochée aux rebords latéraux du panier, le panier comportant par ailleurs un compartiment isotherme. L'utilisation de tels paniers présente les mêmes inconvénients que les précédents, notamment le fait qu'ils soient confinés à la capacité de la corbeille du chariot.

Le document FR 2 714 009 apporte une solution à ce problème en munissant le chariot de deux paniers à parois rigides posés chacun sur le rebord supérieur de la corbeille du chariot. Des pattes d'accroche disposées sur leurs parois latérales forment des moyens de suspension des paniers sur le rebord supérieur de la corbeille. Ces paniers permettent, certes, de mieux ranger les marchandises par catégories ainsi que de faciliter ensuite leur transport, tout en préservant de la place au fond du chariot, mais présentent l'inconvénient de ne pouvoir être agencés qu'en prenant appui sur les deux côtés longitudinaux se faisant face de la corbeille, et, de ce fait, leur volume limite le volume utile de chargement du chariot. Par ailleurs, ces paniers ne conviennent nullement aux chariots munis de sièges de transport pour enfants.

Le document US 2006/0049591 décrit un panier rigide pour un chariot d'achat à corbeille, le panier comportant un rebord en forme de crochet permettant d'être accroché uniquement par sa tranche sur l'un des côtés de la corbeille, à l'intérieur de celle-ci. Ce document ne décrit qu'un seul type de panier destiné à être agencé à l'intérieur de la corbeille et à être utilisé avec un chariot d'achat à corbeille. De par leur forme et emplacement de leurs rebords d'accroche, ces paniers sont difficiles à transporter à la main, surtout lorsque l'on veut en transporter plusieurs en même temps.

### Objet de l'invention

Le but de l'invention est d'obvier les inconvénients précités et de proposer un jeu de bacs amovibles pour un chariot d'achat à corbeille aptes à moduler la capacité de chargement de cette dernière, tout en permettant de respecter les prescription normatives en vigueur et d'assurer une bonne stabilité du chariot.

Un autre but de l'invention est de proposer un jeu de bacs amovibles pour un chariot d'achat à corbeille aptes à améliorer l'efficacité et la capacité de rangement des marchandises, ainsi que la vitesse de chargement et de déchargement du chariot.

Un autre but de l'invention est de proposer un jeu de bacs amovibles pour un chariot d'achat à corbeille aptes à être stockés facilement, pour un encombrement réduit, lorsqu'ils sont hors utilisation, tout en pouvant être transportés facilement à la main.

Un autre but de l'invention est de proposer un jeu de bacs amovibles aptes à assurer un rangement efficace des produits, en évitant les écrasements et en respectant la chaîne du froid, qui puissent être réalisés en série, de manière économique.

### Description des figures

Les figures 2 à 7 se réfèrent à des modes de réalisation de l'invention.
La figure 1 illustre de manière schématique un chariot d'achat à corbeille.
La figure 2 montre de manière schématique un jeu de bacs selon l'invention, fixés sur le bord supérieur de la corbeille d'un chariot d'achat à corbeille, vu d'en haut.
La figure 3(a) montre de manière schématique, vu d'en haut, le bac isotherme avec ses pattes de fixation. La figure 3(b) montre de manière schématique, vu d'en haut, un jeu de quatre bacs en position rangée.
La figure 4 montre de manière schématique, vu d'en haut, le bac frontal avec ses cotes.
La figure 5 montre de manière schématique, vu de côté, le bac frontal accroché à la paroi frontale d'un chariot d'achat à corbeille, avec son moyen d'accroche.
La figure 6 montre de manière schématique, vu d'en haut, un bac latéral avec ses cotes.
La figure 7 montre de manière schématique, vu de côté, un bac isotherme fixé sur le bord supérieur de la corbeille d'un chariot d'achat à corbeille, à l'aide de ses pattes de fixations. Certaines cotes sont indiquées.

### Liste des repères :

| | | | |
|---|---|---|---|
| 1 | Chariot d'achat à corbeille | 2 | Corbeille |
| 3 | Socle | 4 | Roulette |
| 5 | Poignée | 6 | Paroi avant de la corbeille |
| 7 | Paroi arrière de la corbeille | 8 | Paroi latérale de la corbeille |
| 9 | Bord supérieur avant | 10 | Bord supérieur latéral |
| 11 | Fond de la corbeille | 12 | Bord inférieur avant |
| 13 | Bord inférieur latéral | 14 | Bord supérieur arrière |
| 20 | Bac interne | 21 | Bac frontal |
| 22 | Bac latéral | 23 | Bac latéral |
| 24 | Moyen d'accroche | | |
| 30 | Couvercle du bac interne | 31 | Charnière |
| 32 | Moyen de préhension | 33 | Patte frontale |
| 34 | Patte latérale | | |

### Description de l'invention

Selon l'invention, les buts sont atteints avec un jeu de bacs **20, 21, 22, 23** amovibles pour un chariot d'achat à corbeille **1,** ledit chariot d'achat à corbeille **1** comportant une corbeille **2** destinée à contenir les marchandises, ladite corbeille **2** étant supportée par un socle 3 muni de roulettes **4,** ledit chariot **1** comportant une poignée de manoeuvre **5**, lesdits bacs **20, 21, 22, 23** amovibles étant empilables et/ou emboîtables, ledit jeu de bacs **20, 21, 22, 23** amovibles comprenant des bacs **21, 22, 23** ayant chacun une structure rigide comportant une paroi latérale sensiblement plane avec un moyen de fixation **24** permettant de suspendre le bac **21, 22, 23** par sa tranche à l'une des parois **6, 7, 8** de la corbeille **2,** ledit jeu de bacs amovibles étant **caractérisé en ce qu**'il comprend un bac frontal **21** et deux bacs latéraux **22, 23,** au moins deux bacs étant différents entre eux et étant destinés à être adaptés sur le pourtour extérieur de la corbeille **2** du chariot d'achat à corbeille **1.**

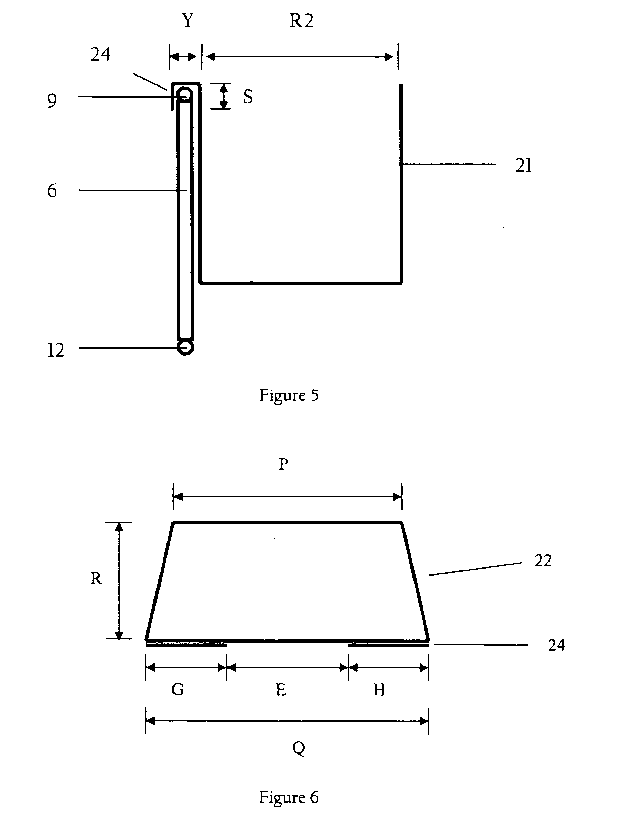

Préférentiellement, il comprend au moins deux bacs **21, 22, 23** dont le rebord supérieur rabattu forme moyen d'accroche **24.** Le rebord rabattu formant moyen d'accroche **24** se trouve dans le prolongement d'une paroi verticale, plane de chaque bac **21, 22, 23,** en la partie supérieure de celle-ci (fig.5). Les moyens d'accroche **24** se trouvent sur une seule paroi, celle qui est la plus proche de la paroi **6, 7, 8** de la corbeille **2,** ce qui permet d'obtenir des bacs facilement empilables et emboîtables dans un faible encombrement en position de stockage et/ou de transport, tout en pouvant être accrochés de manière sure et stable à la paroi externe de la corbeille **2.**

Le jeu de bacs selon l'invention comporte au moins deux bacs **21, 22, 23.** Avantageusement, il comprend un bac frontal **21** et un ou deux bacs latéraux **22, 23** destinés à être adaptés sur le pourtour extérieur de la corbeille **2** du chariot d'achat à corbeille **1.** Bien qu'ils pourraient, certes être adaptés de manière à ce qu'ils soient orientés vers l'intérieur de la corbeille **2,** on préfère une orientation vers l'extérieur afin d'augmenter la capacité de chargement de la corbeille **2** du chariot **1.** Les bacs sont différents l'un de l'autre (on comprend qu'ils ont des volumes différents ou des formes différentes) afin qu'ils puissent s'adapter à la forme du pourtour extérieur du chariot, mais également pour des raisons de stockage et /ou de transport.

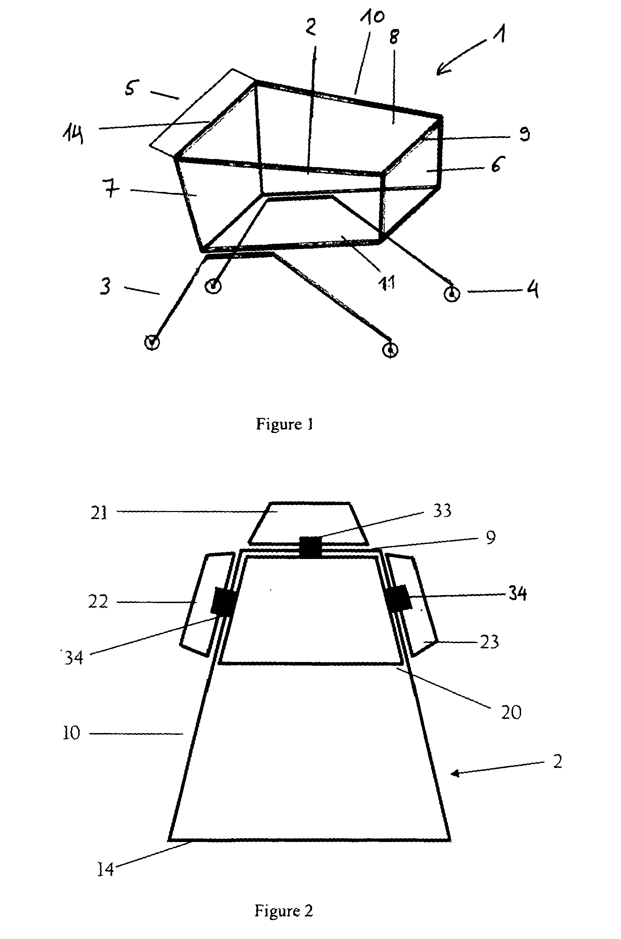

Les figures 2 à 7 décrivent des modes de réalisation particuliers de l'invention. Dans ce qui suit, les cotes portant l'indice **1** se réfèrent au bac interne **20,** les cotes portant l'indice **2** au bac frontal **21,** les cotes portant l'indice **3** au grand bac latéral **22,** et les cotes portant l'indice **4** au petit bac latéral **23.**

La figure 2 montre un mode de réalisation de l'invention, dans lequel le jeu de bacs comporte quatre bacs : un bac interne **20,** frontal **21,** deux bacs latéraux **22, 23,** dont l'un est légèrement plus grand que l'autre, comme sera expliqué ci-dessous.

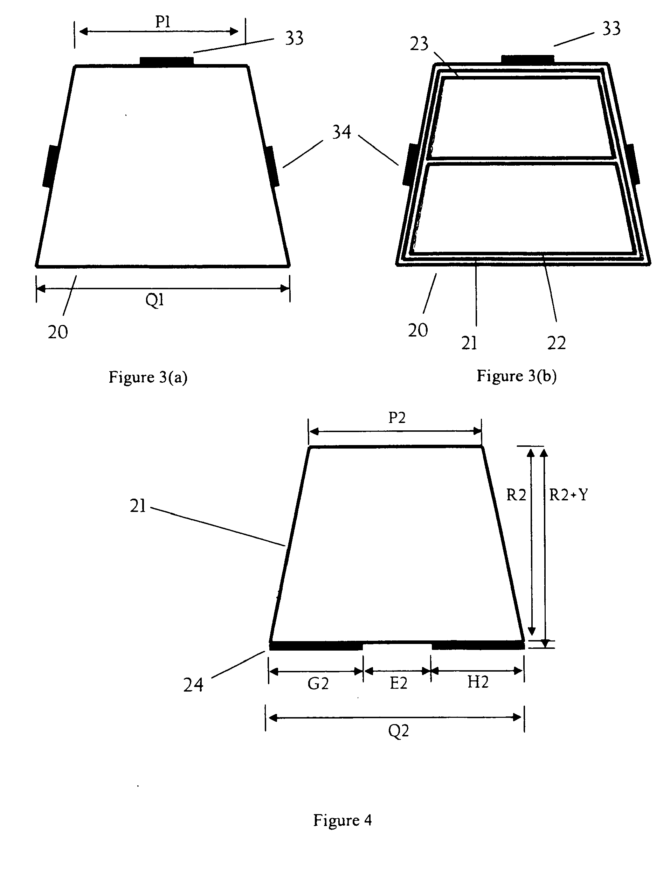

La figure 3(a) montre le bac interne **20** pourvu de moyens de fixation **33, 34.**
La figure 3(b) montre un jeu de quatre bacs **20, 21, 22, 23** dont les dimensions sont choisies de manière à ce que deux bacs latéraux **22, 23** s'emboîtent dans le bac frontal **21,** qui, lui, s'emboîte dans le bac interne **20.**
La figure 4 montre le bac frontal **21** avec ses cotes et celles de ses moyens d'accroche **24.** Avantageusement, le bac frontal **21** a une forme générale de tronc de prisme, ayant une section transversale (on comprend une section réalisée avec un plan de coupe horizontal) en forme de trapèze, la dimension de sa face arrière correspondant sensiblement à celle de la face avant de la corbeille, de forme générale de tronc de prisme, sur laquelle il est destiné à s'adapter, la face avant étant mesurée à l'intérieur de ladite corbeille **2.**
La figure 5 montre le dimensionnement de l'épaisseur Y des moyens d'accroche **24** du bac frontal **21.** Les moyens d'accroche **24** des bacs latéraux **22, 23** sont similaires ou identiques à celui du bac frontal **21,** sauf pour ce qui concerne leur largeur G, H et leur espacement E ; ces paramètres sont définis sur la figure 6. Pour les bacs frontal **21** et latéraux **22, 23,** le moyen d'accroche **24** préféré est un système de rebords en « U » orienté vers l'extérieur par rapport aux plans de côte des bacs, sur la longueur et la largeur supérieure desdits bacs **21, 22, 23.** Les moyens d'accroche **24** sont agencés sur la grande base du trapèze constituant la section transversale de chaque bac **21, 22, 23.** Ces rebords en « U » peuvent être espacés ou ajourés, permettant ainsi l'accrochage en vis-à-vis de deux bacs sur le même bord supérieur de la corbeille, l'un à l'extérieur, l'autre à l'intérieur de la corbeille **2.** Des dimensions typiques pour le rebord sont Y = 1 cm et S = 2 cm.

La figure 6 montre le dimensionnement d'un bac latéral **22,** et le dimensionnement de la largeur G, H et de leur espacement E de ses moyens d'accroche **24.** Les mêmes définitions s'appliquent au bac latéral **23,** au bac frontal **21** et au bac interne **20** (ce dernier n'a cependant pas de moyen d'accrochage en « U » **24**).

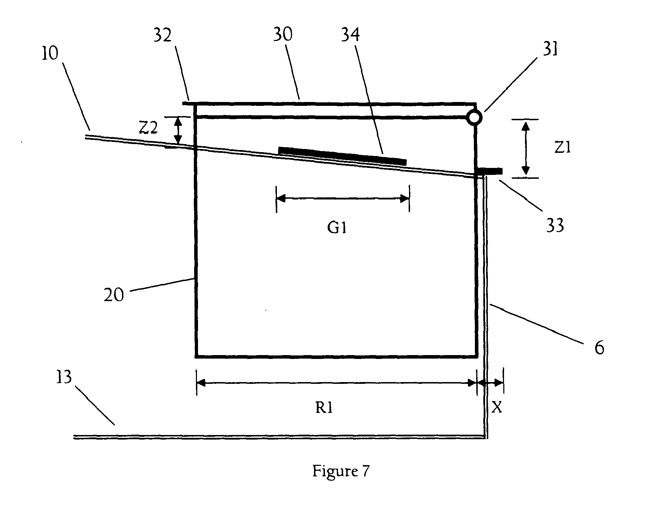

La figure 7 montre le dimensionnement du bac interne **20** et de ses moyens de fixation **33, 34** pour s'adapter sur le rebord d'une corbeille **2** d'un chariot de modèle courant de forme en tronc de prisme.
Selon un mode de réalisation particulier très avantageux, les bacs latéraux **22, 23** sont dimensionnés de manière à ce que, projetés dans un même plan, ils puissent s'inscrire dans le rectangle défini par la grande base et la hauteur du trapèze de la base de la corbeille **2** (qui correspond souvent à la largeur du bord supérieur arrière **14)** en forme de trapèze d'un chariot d'achat à corbeille **1.** Cela évite que l'accrochage d'un jeu de bacs latéraux **22, 23** augmente la largeur hors tout d'un chariot d'achat à corbeille 1, car les surfaces de circulation et plus particulièrement l'espacement entre les rayons en magasin sont dimensionnés en fonction de la largeur hors tout des chariots.

Dans un autre mode de réalisation particulier, qui peut être combiné avec les précédents, au moins deux bacs sont emboîtables l'un dans l'autre. Cela facilite leur rangement. Avantageusement, les bacs latéraux **22, 23** ont une même largeur et ils sont aptes à être rangés côte à côte dans le bac frontal **21.** Un exemple est montré sur la figure 3(b). Les bacs latéraux **22, 23** sont réalisés de manière à ce que leur section transversale respective (réalisée avec un plan de coupe horizontal) a une forme générale de trapèze, la largeur des bacs latéraux **22, 23** étant sensiblement identique.

Les deux bacs latéraux **22, 23** et le bac frontal **21** ont des sections transversales (ou le profil tel que vu d'en haut) de forme trapézoïdale et sont disposés sur le pourtour extérieur de la corbeille **2** du chariot **1** en les accrochant au niveau de la grande base de chaque trapèze. Un tel agencement assure une très bonne stabilité du chariot, tout en permettant aux bacs **21, 22, 23** de s'adapter au pourtour extérieur de la corbeille **2,** pour un moindre encombrement.

Le jeu de bacs peut comporter un bac interne **20,** destiné à être fixé à l'intérieur de la corbeille **2,** proche de sa paroi avant **6,** comme cela est montré sur la figure 7. En effet, l'espace proche de la paroi arrière **7** de la corbeille **2** est souvent pris par un siège pour enfant (non représenté sur les figures) qui est soit intégré dans le chariot, soit amovible. Par ailleurs, il est préférable de garder libre l'espace proche de la paroi arrière **7** du chariot, pour permettre à l'utilisateur le rangement des produits lourds, notamment bouteilles et conserves, afin que le chariot **1** puisse être manoeuvré facilement.

Dans une variante (non représentée aux dessins), le bac frontal **21** est un bac isotherme. Dans une autre variante de réalisation de l'invention, le bac interne **20** est avantageusement un bac isotherme. De préférence, il a des parois rigides, d'une épaisseur qui est inférieure à 3,5 cm. Les dimensions du bac interne **20** sont avantageusement choisies de manière à pouvoir recevoir le bac frontal **21** contenant les deux bacs latéraux **22, 23,** comme cela est montré à titre d'exemple sur la figure 3(b). D'autres dispositions d'emboîtement des bacs sont possibles. Dans un mode de réalisation particulier, le bac interne **20** a une forme générale de tronc de prisme dont les dimensions sont choisies de manière à ce qu'elles correspondent sensiblement à celles de la partie avant de la corbeille **2** du chariot d'achat à corbeille **1.**

Comme montré sur la figure 2, le bac interne **20** peut être fixé sur le bord supérieur de la corbeille **2,** de préférence à l'aide de trois moyens de fixation **33, 34,** tels que des pattes de fixation, dont un se fixe sur le bord supérieur avant **9,** et deux chacun sur un bord supérieur latéral **10** de la corbeille **2.** Leur dépassement X de la paroi du bac **20** est avantageusement compris entre 3 cm et 5 cm. Avantageusement, un moyen frontal de fixation **33** est disposé au centre du rebord frontal du bac **20,** et deux moyens latéraux de fixation **34,** de largeur G1, sont disposés au centre de ses rebords latéraux. Le moyen frontal de fixation **33** peut être rabattable. Les moyens latéraux de fixations **34** peuvent être d'une forme qui permet le portage manuel du bac interne **20,** par exemple ces moyens **34** peuvent être des poignées. Afin de pouvoir s'adapter sur les bords supérieurs latéraux **10** et avant **9** d'un chariot d'achat à corbeille **1** de forme tronconique, les moyens latéraux de fixation **34** sont avantageusement inclinés, afin de maintenir les bords supérieurs avant et arrière du bac interne **20** à une certaine hauteur Z1 et Z2 par rapport audits bords supérieurs de la corbeille **2.** Cela est montré sur la figure 7. Par ailleurs, il est préférable que le fond du bac interne **20** soit situé à un niveau supérieur par rapport au fond **11** de la corbeille **2,** car cela permet le chargement de marchandises de grande dimension au fond **11** de la corbeille **2.**

Le bac interne **20** peut comporter un moyen de fermeture **30,** tel qu'un couvercle. Cela est nécessaire lorsque le bac interne **20** est aménagé comme bac isotherme. Le couvercle **30** peut être fixé sur le bac **20** à l'aide d'une charnière, et peut comporter un joint élastique entre le bord supérieur du bac **20** et le bord inférieur du couvercle **30,** afin de minimiser les échanges d'air avec l'extérieur lorsque le couvercle **30** est fermé. Le couvercle possède avantageusement un moyen de préhension **32,** et peut posséder un moyen de verrouillage (non représenté sur les figures), fonctionnant par exemple par clipsage.

Avantageusement, les rebords des bacs frontal **21** et latéraux **22, 23** sont découpés de la largeur de chacun des moyens de fixation **34** du bac interne **20.**

Nous indiquons ici pour le jeu de bacs selon l'invention quelques jeux de paramètres avantageux.
- Pour le bac interne **20 :**
   G1 = 9 à 15 cm, et préférentiellement 11 à 13 cm ;
   X = 3 à 5 cm ;
   R1 = 35 à 45 cm ; Q1 = 40 à 50 cm ;
   P1 = 35 à 42 cm.
   Epaisseur des parois < 3,5 cm. Hauteur : 32 à 35 cm.
- Pour le bac frontal **21 :**
   G2 et H2 et E2 = 8 à 14 cm (pouvant être égaux ou différents), avec
   G2 + H2 + E2 = Q2 = 35 à 45 cm (et < Q1) ;
   (R2+Y) = 27 à 40 cm (et (R2+Y) < R1).
   P2 = 27 à 35 cm (et P2 < P1)
- Pour le bac latéral **22** :
   G3 = H3 = E3 = 7 à 13 cm (pouvant être égaux ou différents), avec
   G3 + H3 + E3 = Q3 = 30 à 40 cm (et < Q2);
   (R3+Y) = 9 à 15 cm.
   P3 = 27 à 33 cm (et P3 < P2)
- Pour le bac latéral **23** (optionnel) :
   G4 = H4 = E4 = 6 à 11 cm (pouvant être égaux ou différents), avec
   G4 + H4 + E4 = Q4 = 25 à 35 cm (et < Q2, et préférentiellement = 30 cm);
   (R4+Y) = 9 à 15 cm (et (R4+Y) + (R3+Y) < R2).
   P4 = 23 à 30 cm
- Pour les bacs frontal **21** et latéraux **22, 23 :**
   Y = 0,7 à 1,5 cm ; S = 1,5 à 2,5 cm
Préférentiellement, l'épaisseur des parois des bacs frontal **21** et latéraux **22, 23** est inférieure à 1 cm.

Les valeurs pour tous ces paramètres, notamment pour les paramètres P, Q, R, X, Y, G, H et E, sont avantageusement choisies de manière à ce que les bacs **20, 21, 22, 23** puissent s'emboiter correctement.

Un mode de réalisation particulièrement préféré est constitué par un jeu d'un bac interne **20,** d'un bac frontal **21** et un ou deux bacs latéraux **22, 23,** avec les dimensions suivantes :
G1 = 12 cm ; P1 = 38 cm, R1 = 39 cm ; Q1 = 46 cm, X = 3 à 5 cm
Z1 = 7 à 11 cm, Z2 = 2 à 5 cm.
Epaisseur des parois du bac interne **20** inférieure à 3,5 cm.
G2 = H2 = E2 = 11,5 à 12,5 cm avec G2 + H2 + E2 = Q2 = 37 cm ;
(R2+Y) = 30 cm ; P2 = 29 cm,
G3 = H3 = 10 à 11 cm, E3 = 12 à 14 cm avec G3 + H3 + E3 = 34 cm ;
(R3+Y) = 11 cm ; P3 = 30 cm.
G4 = H4 = 8 à 9 cm, E4 = 12 à 14 cm avec G4 = H4 = E4 = 30 cm ;
(R4+Y) = 11 cm ; P4 = 26 cm ;
Y = 1 cm.
Epaisseur de paroi des autres bacs = 0,9 cm.

Dans tous les modes de réalisation de la présente invention, la partie supérieure des bacs **21, 22, 23** peut comprendre un moyen de préhension (non représenté sur les figures), tel qu'une manette ou un bras articulé pour le levage ou la manipulation du bac, qui ne doit cependant pas gêner l'empilement ou l'emboîtement des bacs qui constituent le jeu de bacs. On peut attribuer à chaque bac **20, 21, 22, 23,** ou à certains entre eux, une couleur différente pour faciliter leur identification, les bacs étant de préférence opaques.

Le jeu de bacs selon l'invention peut être adapté sur tous les chariots d'achat à corbeille courants. Il n'est pas important que leur parois soient pleines, ajourées ou constituées d'une grille en fil.

L'invention présente de nombreux avantages. Elle permet le rangement des produits dès le remplissage du chariot **1**, selon un système propre à chaque utilisateur. Ce rangement, en tout état de cause, accélère le passage en caisse et facilite le rangement en sortie du poste de caisse; cela augmente la rentabilité globale des postes de caisse. L'invention permet de respecter la chaîne du froid, grâce à son bac isotherme **20**. Elle protège les produits fragiles, tels que les pots de yaourt, évite leur écrasement voire leur perforation, et évite ainsi la perte de produits et les souillures. Elle permet à l'utilisateur de séparer d'emblée des produits incompatibles entre eux, tels que les liquides alimentaires et l'eau de javel, ou des produits (tels que les vêtements ou les livres) qui risquent d'être souillés par les produits alimentaires en vrac ou des emballages perforé. L'invention permet aussi d'augmenter la capacité des chariots d'achat à corbeille **1**, sans cependant augmenter leur largeur maximale, ce qui gênerait la circulation des chariots entre les rangées. Et finalement, le jeu de bacs selon l'invention peut être rangé de manière rapide, pratique et compacte lors qu'il n'est pas utilisé.

### Exemple

On a réalisé un jeu de bacs selon l'invention avec un bac interne qui était un bac isotherme, un bac frontal et deux bacs latéraux, avec les paramètres suivants :
G1 = 12 cm ; P1 = 38 cm, R1 = 39 cm ; Q1 = 46 cm, X = 5 cm ;
Z1 = 9 cm, Z2 = 3,5 cm.
G2 = H2 = 12 cm, E2 = 13 cm, Q2 = 37 cm ;
(R2+Y) = 30 cm ; P2 = 29 cm,
G3 = H3 = 10,5 cm, E3 = 13 cm, Q3 = 34 cm
(R3+Y) = 11 cm ; P3 = 30 cm.
G4 = H4 = 8,5 cm, E4 = 13 cm, Q4 = 30 cm ;
(R4+Y) = 11 cm ; P4 = 26 cm ;
Y = 1 cm, S = 2 cm.
Le bac isotherme était à double paroi rempli de polystyrène expansé, avec une épaisseur totale de paroi inférieure à 3,5 cm (de l'ordre de 3,3 cm) et était pourvu d'un couvercle à charnière, la charnière étant disposée côté paroi avant de la corbeille. Sa hauteur (sans le couvercle) était de 35 cm. Les autres bacs avaient une épaisseur de paroi de 1 cm. Ils ont été fabriqués en plastique injecté (ABS ou PP), comportant des parois pleines mais d'épaisseur non uniforme, avec des raidisseurs intégrés. Dans une variante avantageuse de l'invention, les bacs sont réalisés en un matériau plastique alimentaire.
De préférence, les bacs ne présentent pas de coins ou arrête vive, mais sont réalisés avec des coins arrondis ou chanfreinés.

Ce jeu de bacs est emboîtable comme montré schématiquement sur la figure 3(b). Il s'adapte sur une grande variété de chariots d'achat à corbeille de dimensions différentes.

## Revendications

1. Jeu de bacs (21, 22, 23) amovibles pour un chariot d'achat à corbeille (1), ledit chariot (1) comportant une corbeille (2) destinée à contenir les marchandises, ladite corbeille (2) étant supportée par un socle (3) muni de roulettes (4), ledit chariot (1) comportant une poignée de manoeuvre (5), lesdits bacs (21, 22, 23) amovibles étant empilables et/ou emboîtables, ledit jeu de bacs comprenant des bacs (21, 22, 23) ayant chacun une structure rigide comportant une paroi latérale plane avec un moyen de fixation (24) permettant de suspendre le bac (21, 22, 23) par sa tranche à l'une des parois (6, 7, 8) de la corbeille (2) ledit jeu de bacs (21, 22, 23) amovibles étant **caractérisé en ce qu'**il comprend un bac frontal (21) et deux bacs latéraux (22, 23), au moins deux bacs étant différents entre eux, et étant destinés à être adaptés sur le pourtour extérieur de la corbeille (2) du chariot d'achat à corbeille (1).

2. Jeu de bacs selon la revendication 1, **caractérisé en ce que** les bacs latéraux (22,23) sont réalisés de manière à pouvoir s'emboîter dans le bac frontal (21).

3. Jeu de bacs selon la revendication 2, **caractérisé en ce que** les bacs latéraux sont agencés côte à côte à l'intérieur du bac frontal (21).

4. Jeu de bacs (21, 22, 23) amovibles selon l'une quelconque des revendications 1 à 3, **caractérisé en ce que** le bac frontal (21) a une forme générale de tronc de prisme ayant une section transversale en forme de trapèze, la dimension de sa face arrière correspondant sensiblement à celle de la face avant de la corbeille (2), mesurée à l'intérieur de ladite corbeille (2), de forme générale de tronc de prisme du chariot d'achat à corbeille (1).

5. Jeu de bacs selon l'une des revendications précédentes, **caractérisé en ce que** la section transversale des bacs latéraux (22,23) a une forme générale de trapèze, la largeur des bacs latéraux (22,23) étant sensiblement identique.

6. Jeu de bacs (21, 22, 23) amovibles selon l'une des revendications 2 à 5, **caractérisé en ce que** les bacs latéraux (22, 23) sont dimensionnés de manière à ce que, projetés dans un même plan, ils puissent s'inscrire dans le rectangle défini par la grande base et la hauteur du trapèze de la base de la corbeille (2) en forme de trapèze d'un chariot d'achat à corbeille (1).

7. Jeu de bacs (21, 22, 23) amovibles selon l'une des revendications précédentes, **caractérisé en ce que** ledit moyen de fixation (24) est réalisé au niveau du rebord supérieur d'une paroi verticale des bacs (21,22,23) et forme un moyen d'accroche sur la corbeille (2).

8. Jeu de bacs amovibles (21, 22, 23) selon l'une des revendications précédentes, **caractérisé en ce qu'**il comporte en plus un bac interne (20), qui est de préférence un bac isotherme.

9. Jeu de bacs (20, 21, 22, 23) amovibles selon la revendication 8, **caractérisé en ce que** le bac interne (20) a des parois rigides et ses dimensions sont choisies de manière à pouvoir recevoir le bac frontal (21).

10. Jeu de bacs (20, 21, 22, 23) amovibles selon l'une des revendications 8 à 9, **caractérisé en ce que** le bac interne (20) a une forme générale de tronc de prisme dont les dimensions sont choisies de manière à ce qu'elles correspondent sensiblement à celles de la partie avant de la corbeille (2) du chariot d'achat à corbeille (1).

11. Jeu de bacs (20,21,22,23) amovibles selon la revendication 10, **caractérisé en ce que** le bac interne (20) peut être fixé sur le bord supérieur de la corbeille (2) à l'aide de trois moyens de fixation (33,34) dont un se fixe sur le bord supérieur avant (9) et deux chacun sur un bord supérieur latéral (10) de la corbeille (2).

12. Jeu de bacs (20, 21, 22, 23) amovibles selon l'une des revendications 8 à 11, **caractérisé en ce que** le bac interne (20) comprend trois pattes de fixation (33, 34) disposée l'une (33) au centre de son bord frontal et deux autres (34) au centre de ses bords latéraux et que les rebords (24) des bacs frontal (21) et latéraux (22, 23) sont découpés de la largeur de chacune des pattes de fixation (33, 34) du bac interne (20).
